# EUROPÄISCHE PATENTSCHRIFT

(11) **EP 0 473 807 B1**
(45) Veröffentlichungstag und Bekanntmachung des Hinweises auf die Patenterteilung: **08.03.1995**
(21) Anmeldenummer: 90116854.2
(22) Anmeldetag: 03.09.1990
(51) Int. Cl.: F16L 33/22

(54) **Rohrverbindung**
Pipe connection
Raccord de tuyaux

(43) Veröffentlichungstag der Anmeldung: 11.03.1992
(73) Patentinhaber: Ruppert, Hans-Peter, D-65187 Wiesbaden (DE)
(72) Erfinder: Wendorff, Ernst, D-6204 Taunusstein 4 (DE)
(74) Vertreter: Blumbach, Kramer & Partner

(56) Entgegenhaltungen:
- EP-A- 0 380 970
- DE-U- 6 751 209
- DE-U- 7 204 515
- US-A- 2 833 567
- US-A- 3 237 974

## Beschreibung

Die Erfindung betrifft eine Rohrverbindung, insbesondere für Kunststoffrohre und -schläuche oder dergleichen, mit einem inneren im Inneren des zu verbindenden Rohres befindlichen Gegenlagerstück und einer äußeren auf der Rohraußenseite vorgesehenen Klemmeinrichtung, die ein Dichtungsstück und ein Andrückstück umfaßt, die relativ zueinander bewegbar sind, und wobei im Bereich des Rohrendes an der inneren Fläche des Dichtungsstückes ein oder mehrere Vorsprünge zur Rohrverbindungsachse hin vorgeseheeeeen sind, die ringförmig und sägezahnartig ausgebildet sind, indem sie durch rechtwinklig zur Rohrverbindungsachse hin vorgesehen sind, die ringförmig und sägezahnartig ausgebildet sind, indem sie durch rechtwinklig zur Rohrverbindungsachse verlaufende Hinterschneidungen gebildet werden.

Aus der DE-U-89 11 166 und der EP-A 380 970 ist eine Rohrverbindung bekannt mit einer außen befindlichen Klemmeinrichtung und einem innenliegenden Gegenlagerstück. Die Klemmeinrichtung besteht aus einem Fitting und einer oder zwei einteiligen Überwurfmuttern. Der Fitting ist im Bereich des Rohrendes mit einer ringförmigen Ausnehmung und diese ihrerseits mit einer Einkerbung versehen.

In der DE-U-7 204 515 ist eine Anschlußkupplung für Rohre aus plastischem Material mit einem Stützring sowie einer zwischen Kupplungsgehäuse und konisch aufgeweitetem Rohrende angeordneten Klemmbüchse offenbart, bei der durch Anziehen des Spannmittels die Klemmbüchse fest gegen die äußere Mantelfläche gepreßt wird, so daß eine Dichtwirkung erzielt wird.

Diese Rohrverbindungen arbeiten bei normalen Druckbeaufschlagungen und bei hohen Temperaturen zufriedenstellend, jedoch treten bei hohen Druckbeaufschlagungen Undichtigkeiten auf. Des weiteren können die Rohre durch die beim Drehen der Überwurfmutter oder des Spannmittels erzeugten Reibungskräfte örtlich derart hoch beansprucht werden, daß die entstehenden Walkkräfte das Rohr schädigen.

Aus der US-A-3 237 974 ist eine Schlauchkupplung bekannt, bei der die Gehäuseoberfläche Stufen umfaßt, wobei die stufig strukturierte Oberfläche an einer Schlauchzwischenlage des Rohres anliegt.

Aus der US-A-2 833 567 ist eine Rohrverbindung bekannt, die ein Gegenlagerstück mit spitz zulaufenden Vorsprüngen umfaßt, die sich bei der Montage der Rohrverbindung in die Außenseite des zu verbindenden Kunststoffrohres eindrücken. Nachteilig an der zuvor erwähnten Schlauchverbindung und der Rohrverbindung ist, daß die Schlauchzwischenlage bzw. das zu verbindende Kunststoffrohr bei Einwirkung zu starker Kräfte zur Rißbildung neigt und die Dichtwirkung hierdurch beeinträchtigt wird.

Aufgabe der Erfindung ist es daher, eine Rohrverbindung zu schaffen, die die Nachteile des Standes der Technik überwindet, die auch bei höheren Druckbeaufschlagungen eine einwandfreie Dichtigkeit der Rohrverbindung gewährleistet und bei der Montage eine höhere Kraftanwendung ermöglicht.

Die Lösung der Aufgabe ist im Kennzeichen des Anspruchs 1 angegeben.

Die an der Klemmeinrichtung angeordneten Vorsprünge drücken sich bei der Montage der Rohrverbindung in die Außenseite des zu verbindenden Rohres ein. Die sägezahnartige Ausbildung der ringförmigen Vorsprünge mit rechtwinklig zur Rohrachse verlaufenden Hinterschneidungen und auf einem Kegelstumpfmantel liegende Scheitelflächen, führt dazu, daß der Flächendruck im Bereich der sägezahnförmigen Vorsprünge konzentriert wird, das Material bei Beanspruchung zu fließen beginnt und eine zuverlässige Dichtigkeit der Rohrverbindung auch bei hohen Drücken erreicht wird.

Eine Verbesserung der Dichtigkeit der Rohrverbindung wird in einer Weiterbildung der Erfindung dadurch erreicht, daß die Kegelmantelfläche zur Achse des verbindenden Rohres einen Winkel von etwa 10° (α) aufweist.

In einer vorteilhaften Ausführungsform ist das Dichtungsstück rohrförmig ausgebildet und weist vom Ende des zu verbindenden Rohres aus gesehen einen ersten Abschnitt auf, dessen Innendurchmesser in etwa dem des zu verbindenden Rohres entspricht und an den sich ein zweiter Abschnitt anschließt, der in Form einer Wange von außen über das zu verbindende Rohr greift.

Die Wange wird vorteilhafterweise mit einem, vom Ende des zu verbindenden Rohres aus gesehen, ersten Teil ausgebildet, dessen Innendurchmesser in etwa dem Außendurchmesser des zu verbindenden Rohres entspricht, an den sich ein zweiter Teil anschließt, der eine konusartige Erweiterung des Innendurchmessers aufweist, auf dem die Vorsprünge angeordnet sind.

Zweckmäßigerweise laufen die ringförmigen Vorsprünge auf der Wange um.

In einer vorteilhaften Ausführungsform schlägt die Erfindung vor, daß das zum Dichtungsstück relativ bewegbare Andrückstück seinerseits mindestens zwei relativ zueinander bewegbare Teile umfasst.

Zweckmäßigerweise wird das Andrückstück rohrförmig ausgebildet. In einer bevorzugten Ausführung ist das Andrückstück mit einem Gleitstück versehen, das an dem zu verbindenden Rohr mit seiner Andrückfläche in Anlage kommt und mit seinen Oberflächen in einem Druckstück sitzt, das auf dem Gleitstück gleitet.

Vorteilhafterweise wird das Gleitstück als Gleitring ausgebildet, der eine schräg zur Rohrachse verlaufende Andrückfläche aufweist und mit waagerecht und rechtwinklig zur Rohrachse verlaufenden Gleitflächen im Druckstück sitzt.

Als Vorteil wird gesehen, Dichtungs- und Druckstück kraftschlüssig, vorzugsweise verschraubbar, miteinander zu verbinden.

Um bei der Montage der Rohrverbindung ein Ausweichen der Rohrwand des zu verbindenden Rohres nach Innen zu verhindern, wird zweckmäßigerweise ein dem Innenprofil der Klemmeinrichtung unter Berücksichtigung der Stärke des zu verbindenden Rohres entsprechend angepaßtes Gegenlagerstück im Rohrinneren vorgesehen.

Die Erfindung soll nachstehend anhand von Ausführungsbeispielen unter Bezugnahme auf die beigefügten Zeichnungen näher erläutert werden.

In den Zeichnungen zeigen:
- Fig. 1: eine Rohrverbindung mit an dem Dichtungsstück angeordneten Vorsprüngen und mit einem zweigeteilten Andrückstück,
- Fig. 2: die Wange eines Dichtungsstückes,
- Fig. 3: die Draufsicht auf einen Gleitring,
- Fig. 4: einen Schnitt entlang der Linie I-I in Fig. 3,
- Fig. 5: ein Druckstück,
- Fig. 6: ein Gegenlagerstück.

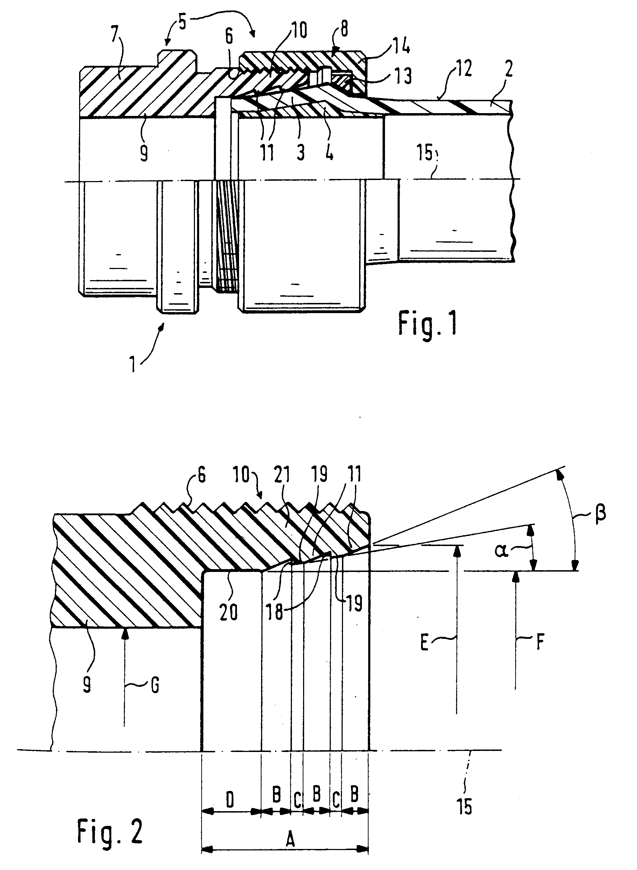

In Fig. 1 ist eine allgemein mit 1 bezeichnete Rohrverbindung dargestellt, bei der ein Kunststoffrohr 2 im Bereich seines zu verbindenden Endes 3 über ein Gegenlagerstück 4 geschoben ist. Außen am Rohr ist eine Klemmeinrichtung 5 vorgesehen, die aus einem mit einem Außengewinde 6 versehenen Dichtungsstück 7 besteht, auf das ein Andrückstück 8 aufgeschraubt ist. Das Dichtungsstück 7 besteht aus einem ersten Abschnitt 9, dessen Innendurchmesser G dem des zu verbindenden Rohres 2 entspricht, und einem zweiten Abschnitt, einer Wange 10, der von außen über das zu verbindende Rohr 2 greift. An der Wange 10 sind Vorsprünge 11 angeordnet, die sich in die Außenfläche 12 des zu verbindenden Rohres 2 eindrücken. Das Andrückstück 8 besteht aus einem Gleitstück 13 und einem Druckstück 14. Das Gleitstück 13 ist als Gleitring ausgebildet und weist eine schräg zur Rohrachse 15 verlaufende Andrückfläche 16 und waagerecht und rechtwinklig zur Rohrachse 15 verlaufende Gleitflächen 17a und 17b auf. Das Druckstück 14 ist rohrförmig ausgebildet und liegt auf den Gleitflächen 17a und 17b des Gleitringes 13 auf. Das Druckstück 14 hat somit keinen direkten Kontakt zum zu verbindenden Rohr 2. Im Rohrinneren befindet sich das der Innenkontur der Klemmeinrichtung 5 angepaßte Gegenlagerstück 4.

In Fig. 2 ist die von außen über das Rohr greifende Wange 10 des Dichtungsstücks 7 schematisch dargestellt. Die Vorsprünge 11 sind auf der konusartigen Erweiterung 21 der Wange 10 angeordnet. Durch ihren Druck auf die Außenfläche 12 des zu verbindenden Rohres 2 wird die Dichtigkeit der Rohrverbindung 1 erzielt. Die Vorsprünge 11 sind sägezahnartig ausgebildet, indem sie durch rechtwinklig zur Rohrachse verlaufende Hinterschneidungen 18 gebildet werden und ihre Scheitelflächen 19 auf einem Kegelstumpfmantel liegen. Die spezielle Ausführungsform des Dichtungsstückes 7 ist abhängig von dem Außendurchmesser des zu verbindenden Rohres 2 und seiner Wanddicke. Dieses gilt auch für die speziellen Ausführungsformen des Gleitstückes 13, des Druckstückes 14 und des Gegenlagerstückes 4. Zum Beispiel sind für ein Rohr mit 40 mm Außendurchmesser und 3,7 mm Wanddicke folgende Maße vorteilhaft: A = 17 mm, B = 3 mm, C = 2 mm, D = 4 mm, E = 47,5 mm, F = 42 mm, G = 32,6 mm, α = 10°, β = 22°.

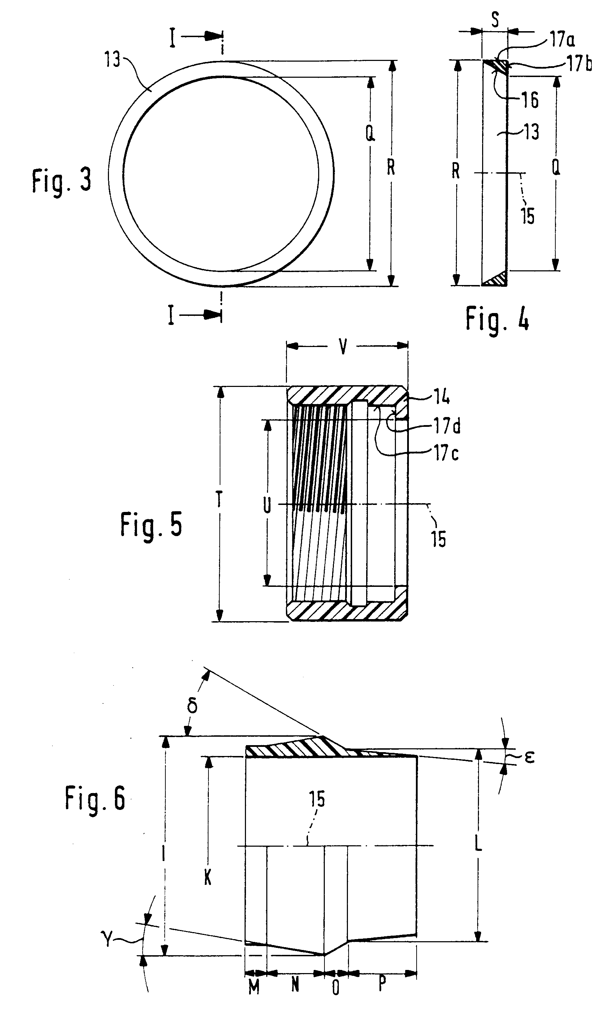

In Fig. 3 ist die Draufsicht auf einen Gleitring 13 dargestellt, der, wie aus Fig. 4 zu ersehen ist, einen dreieckigen Querschnitt aufweist. Der Gleitring 13 sitzt mit der außenliegenden Gleitfläche 17a und einer in Axialrichtung dazu rechtwinklig angeordneten Gleitfläche 17b in dem Druckstück 14 und kommt mit der, wie aus Fig. 4 zu entnehmen ist, schräg verlaufenden Andrückfläche 16 in Betriebsstellung mit dem zu verbindenden Rohr in Anlage. Auf diese Art und Weise wird es ermöglicht, eine große Andrückkraft aufzubringen, um dadurch die Dichtwirkung zu erhöhen. Insbesondere wird damit erreicht, daß der Gleitring gleitfest auf dem zu verbindenden Rohr ruht und keine Reibung zwischen dem Rohr und dem Gleitring stattfindet, während die relative Bewegung zwischen den Gleitflächen 17a und 17b des Gleitringes 13 und dem Druckstück 14 stattfindet. Für die Bemaßung eines Rohres mit 40 mm Außendurchmesser und 3,7 mm Wanddicke ergeben sich für den Gleitring die vorteilhaften Maße wie folgt: Außendurchmesser R = 49 mm, Innendurchmesser Q = 42,5 mm, radiale Erstreckung S = 7 mm, woraus eine schräg verlaufende Andrückfläche 16 von etwa 30° zur Rohrachse folgt.

In Fig. 5 ist das Druckstück 14 näher dargestellt. Das Druckstück 14 weist den Gleitflächen 17a und 17b des Gleitringes 13 entsprechende Gleitflächen 17c und 17d auf, so daß während der Montage der Rohrverbindung 1 die Flächen 17a bzw. 17c und 17b bzw. 17d des Gleitringes 13 und des Druckstückes 14 aufeinander gleiten. Die vorteilhaften Maße für das obengenannte Rohr betragen für das Druckstück 14 für den Außendurchmesser T = 60 mm, für den Innendurchmesser des radialen Durchlasses U = 22 mm und die gesamte radiale Länge V = 28 mm.

In Fig. 6 ist schematisch das im Rohrinneren befindliche Gegenlagerstück 4 dargestellt. Sein Innendurchmesser K entspricht dem des zu verbindenden Rohres 2. Seine Außenkontur ist der jeweiligen Innenkontur der Klemmeinrichtung 5 angepaßt. Für das gewählte Ausführungsbeispiel mit einem Rohrdurchmesser von 40 mm und einer Rohrwanddicke von 3,7 mm haben sich die folgenden Maße als vorteilhaft erwiesen: I = 40 mm, K = 32,6 mm, L = 35 mm, M = 2 mm, N = 12,25 mm, O = 4,5 mm, P = 11,5 mm, γ = 10°, δ = 30°, ε = 5°.

Mit der vorliegenden Erfindung werden somit zwei Maßnahmen vorgeschlagen, die bei einer Rohrverbindung, wie eingangs erwähnt, die Dichtwirkung wesentlich verbessern. Die Maßnahmen können ohne Schwierigkeiten auf Rohre verschiedener Bemaßungen, wie dargelegt, Anwendung finden.

## Patentansprüche

1. Rohrverbindung (1), insbesondere für Kunststoffrohre und -schläuche oder dergleichen, mit einem inneren im Inneren des zu verbindenden Rohres (2) befindlichen Gegenlagerstück (4) und einer äußeren auf der Rohraußenseite vorgesehenen Klemmeinrichtung (5), die ein Dichtungsstück (7) und ein Andrückstück (8) umfaßt, die relativ zueinander bewegbar sind, und wobei
im Bereich des Rohrendes (3) an der inneren Fläche des Dichtungsstückes (7) ein oder mehrere Vorsprünge (11) zur Rohrverbindungsachse (15) hin vorgesehen sind, die ringförmig und sägezahnartig ausgebildet sind, indem sie durch rechtwinklig zur Rohrverbindungsachse (15) verlaufende Hinterschneidungen (18) gebildet werden,
dadurch gekennzeichnet,
daß die Scheitelflächen der Vorsprünge (19) auf einem Kegelstumpfmantel liegen, der sich zum dem Andrückstück abgewandten Ende des Dichtungsstückes (7) hin verjüngt.

2. Rohrverbindung nach Anspruch 1,
dadurch gekennzeichnet, daß die Kegelmantelfläche zur Achse des zu verbindenden Rohres (2) einen Winkel von etwa 10° (α) aufweist.

3. Rohrverbindung nach Anspruch 1 oder 2,
dadurch gekennzeichnet, daß das Dichtungsstück (7) rohrförmig ausgebildet ist und, vom Ende (3) des zu verbindenden Rohres (2) aus gesehen, einen ersten Abschnitt (9) aufweist, dessen Innendurchmesser (G) dem des zu verbindenden Rohres (2) entspricht, und
daß sich ein zweiter Abschnitt anschließt, der in Form einer Wange (10) von außen über das zu verbindende Rohr (2) greift.

4. Rohrverbindung nach Anspruch 3,
dadurch gekennzeichnet, daß die Wange (10), vom Ende (3) des zu verbindenden Rohres (2) aus gesehen, einen ersten Teil (20) aufweist, dessen Innendurchmesser (F) dem Außendurchmesser des zu verbindenden Rohres (2) entspricht, und
daß sich ein zweiter Teil (21) anschließt, der eine konusartige Erweiterung des Innendurchmessers (F, E) aufweist, auf dem die ringförmigen Vorsprünge (11) angeordnet sind.

5. Rohrverbindung nach Anspruch 4,
dadurch gekennzeichnet, daß die ringförmigen Vorsprünge (11) auf der Wange (10) umlaufen.

6. Rohrverbindung nach einem der Ansprüche 1 bis 5,
dadurch gekennzeichnet, daß das zum Dichtungsstück (7) relativ bewegbare Andrückstück (8) seinerseits mindestens zwei relativ zueinander bewegbare Teile (13, 14) umfaßt.

7. Rohrverbindung nach Anspruch 6,
dadurch gekennzeichnet, daß das vorzugsweise rohrförmig ausgebildete Andrückstück (8) mit einem Gleitstück (13) versehen ist, das an dem zu verbindenden Rohr (2) mit seiner Andrückfläche (16) in Anlage kommt und mit seinen Gleitflächen (17a, 17b) in einem Druckstück (14) sitzt, das auf dem Gleitstück (13) gleitet.

8. Rohrverbindung nach Anspruch 7,
dadurch gekennzeichnet, daß das Gleitstück (13) als Gleitring ausgebildet ist, der eine schräg zur Rohrachse (15) verlaufende Andrückfläche (16) aufweist und mit waagrecht und rechtwinklig zur Rohrachse (15) verlaufenden Gleitflächen (17a, 17b) im Druckstück (14) sitzt.

9. Rohrverbindung nach den Ansprüchen 6 bis 8, dadurch gekennzeichnet, daß Dichtungs- (7) und Druckstück (14) kraftschlüssig, vorzugsweise verschraubbar, miteinander verbunden sind.

10. Rohrverbindung nach einem der Ansprüche 1 bis 9,
dadurch gekennzeichnet, daß ein dem Innenprofil der Klemmeinrichtung (5) unter Berücksichtigung der Stärke des zu verbindenden Rohres (2) entsprechend angepaßtes Gegenlagerstück (4) im Rohrinneren vorgesehen ist.

## Claims

1. A pipe connection (1), more particularly for plastic tubes and hoses or the like, comprising an inner abutment member (4) inside the pipe (2) for connection, and an outer clamping means (5) which is provided on the outside of the pipe and which comprises a sealing member (7) and a pressure-application member (8), the latter members being movable relatively to one another, one or more projections (11) towards the pipe connection axis (15) being provided in the region of the pipe end (3) on the inner surface of the sealing member (7), said projections being annular and of sawtooth shape, being formed by undercuts (18) extending at right angles to the pipe connection axis (15),
characterised in that the apex surfaces of the projections (19) are situated on a truncated cone generatrix which tapers towards that end of the sealing member (7) which is remote from the pressure-application member.

2. A pipe connection according to claim 1,
characterised in that the cone generatrix has an angle of about 10° (α) to the axis of the pipe (2) for connection.

3. A pipe connection according to claim 1 or 2,
characterised in that the sealing member (7) is of tubular construction and, as considered from the end (3) of the pipe (2) for connection, comprises a first portion (9) whose inside diameter (G) corresponds to that of the pipe (2) for connection, and in that a second portion follows which engages in the form of a cheek (10) from outside over the pipe (2) for connection.

4. A pipe connection according to claim 3,
characterised in that the cheek (10), as considered from the end (3) of the pipe (2) for connection, comprises a first part (20) whose inside diameter (F) corresponds to the outside diameter of the pipe (2) for connection and in that a second part (21) follows which comprises a cone-like widening of the inside diameter (F, E) on which the annular projections (11) are disposed.

5. A pipe connection according to claim 4,
characterised in that the annular projections (11) extend around the periphery of the cheek (10).

6. A pipe connection according to any one of claims 1 to 5, characterised in that the pressure-application member (8), which is movable relatively to the sealing member (7), in turn comprises at least two parts (13, 14) movable relatively to one another.

7. A pipe connection according to claim 6,
characterised in that the preferably tubular pressure-application member (8) is provided with a sliding member (13) which by its pressure-application surface (16) comes into contact with the pipe (2) for connection and which by its sliding surfaces (17a, 17b) fits in a pressure member (14) which slides on the sliding member (13).

8. A pipe connection according to claim 7,
characterised in that the sliding member (13) is in the form of a sliding ring having a pressure-application surface (16) extending at an angle to the pipe axis (15) and fitting in the pressure member (14) by sliding surfaces (17a, 17b) extending horizontally and at right angles to the pipe axis (15).

9. A pipe connection according to claims 6 to 8,
characterised in that the sealing member (7) and pressure member (14) are operatively connected, preferably by a screw connection.

10. A pipe connection according to any one of claims 1 to 9, characterised in that an abutment member (4) appropriately adapted to the inside profile of the clamping means (5), allowing for the thickness of the pipe (2) for connection, is provided in the pipe interior.

## Revendications

1. Raccord pour tubes (1), en particulier pour tubes et tuyaux en matière plastique ou analogue, avec une pièce de contre-palier (4) se trouvant à l'intérieur du tube (2) à relier et un dispositif de serrage (5) extérieur, prévu en face extérieure du tube et comprenant une pièce d'étanchéité (7) une pièce de pressage (8), déplaçables l'une par rapport à l'autre, et où
dans la zone de l'extrémité de tube (3) sont prévues, sur la surface intérieure de la pièce d'étanchéité (7), une ou plusieurs saillies (11) orientées en direction de l'axe du raccord pour tubes (15) et de configuration annulaire et en dents de scie, formées au moyen de contre-dépouilles (18) s'étendant à l'angle droit par rapport à l'axe du raccord pour tubes (15), caractérisé en ce que
les surfaces de sommet des saillies (19) sont situées sur une enveloppe tronconique allant en s'effilant en direction de l'extrémité, opposée à la pièce de pressage, de la pièce d'étanchéité (7).

2. Raccord pour tubes selon la revendication 1,
caractérisé en ce que la surface d'enveloppe conique fait un angle d'à peu près 10° (α) par rapport à l'axe du tuyau (2) à relier.

3. Raccord pour tubes selon la revendication 1 ou 2,
caractérisé en ce que la pièce d'étanchéité (7) est tubulaire et, en observant depuis l'extrémité (3) du tuyau (2) à relier, présente un premier tronçon (9) dont le diamètre intérieur (G) correspond à celui du tuyau (2) à relier, et
en ce qu'est raccordé un deuxième tronçon saisissant de l'extérieur le tuyau (2) à relier et se présentant sous la forme d'une coulisse (10).

4. Raccord pour tubes selon la revendication 3,
caractérisé en ce que la coulisse (10), observée depuis l'extrémité (3) du tuyau (2) à relier, présente une première partie (20), dont le diamètre intérieur (F) correspond au diamètre extérieur du tuyau (2) à relier, et
en ce que lui est raccordée une deuxième partie (21) présentant un agrandissement conique du diamètre intérieur (F, E), sur lequel sont disposées les saillies annulaires (11).

5. Raccord pour tubes selon la revendication 4,
caractérisé en ce que les saillies annulaires (11) font le pourtour de la coulisse (10).

6. Raccord pour tubes selon l'une des revendications 1 à 5, caractérisé en ce que la pièce de pressage (8) pouvant être déplacée par rapport à la pièce d'étanchéité (7) comprend de son coté au moins deux parties (13, 14) pouvant être déplacées l'une par rapport à l'autre.

7. Raccord pour tubes selon la revendication 6,
caractérisé en ce que la pièce de pressage (8), réalisée de préférence tubulaire, est pourvue d'une pièce de coulissement (13), venant en appui par sa surface de pressage (16) sur le tuyau (2) à relier et siégeant, par ses faces de coulissement (17a, 17b) dans une pièce de pressage (14) coulissant sur la pièce de pressage (13).

8. Raccord pour tubes selon la revendication 7,
caractérisé en ce que la pièce de coulissement (13) est réalisée sous forme d'anneau coulissant présentant une surface de pressage (16), s'étendant obliquement par rapport à l'axe de tuyau (15) et siégeant dans la pièce de pressage (16) à l'aide de surfaces de coulissement (17a, 17b) s'étendant horizontalement et perpendiculairement par rapport à l'axe de tuyau (15)

9. Raccord pour tubes selon les revendications 6 à 8,
caractérisé en ce que la pièce d'étanchéité (7) et la pièce de pressage (14) sont reliées ensemble mécaniquement, de préférence par possibilité de vissage.

10. Raccord pour tubes selon l'une des revendications 1 à9,
caractérisé en ce qu'est prévu, à l'intérieur du tuyau, une pièce de contre-palier (4) adaptée au profil intérieur du dispositif de serrage (5) et prenant en compte l'épaisseur du tuyau (2) à relier.
